Europäisches Patentamt

European Patent Office

Office européen des brevets

(19)

(11) **EP 1 478 121 A2**

(12) **EUROPEAN PATENT APPLICATION**

(43) Date of publication:
**17.11.2004 Bulletin 2004/47**

(51) Int Cl.⁷: **H04L 9/30**

(21) Application number: **04252528.7**

(22) Date of filing: **30.04.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: **09.05.2003  MY 0301745**

(71) Applicants:
• **Abu, Nor Azman bin
Bukit Beruang, Melaka 75450 (MY)**
• **Mohamed Lazim, Mohamed Fauzi bin
Kuala Lumpur 58100 (MY)**

(72) Inventors:
• **Abu, Nor Azman bin
Bukit Beruang, Melaka 75450 (MY)**
• **Mohamed Lazim, Mohamed Fauzi bin
Kuala Lumpur 58100 (MY)**

(74) Representative: **Fairbairn, Angus Chisholm
Marks & Clerk,
57-60 Lincoln's Inn Fields
London WC2A 3LS (GB)**

(54) **Method and apparatus for ID-based public key generation**

(57)    There is disclosed a method and apparatus for the generation of public key in a cryptosystem that is created based on a user definable and recognizable ID of ASCII characters. The apparatus comprises of a computer means (1) having at least a processor (2), a memory unit (3), an input device (4) and a key generation module (5) residing in the memory unit (3). When executed, the key generation module processes the user-definable and recognizable ID of ASCII characters inputted via the input device to generate the public key. Triple DES, Advance encryption system (AES), secure hash algorithm (SHA) and elliptic curve encryption algorithm are applied to arrive at the desired objectives. A PC-based implementation of such method is also preferred.

FIGURE 2

**EP 1 478 121 A2**

**Description**

**1. TECHNICAL FIELD OF THE INVENTION**

The present invention relates generally to the field of cryptography and, particularly, to a method and apparatus for public key generation in a cryptosystem that is created based on a user definable and recognizable ID of ASCII characters. The present application also relates to a PC-based cryptosystem that generates public key for use in association with the manipulation of digital data and/or transmission of messages and data over communication channel. Further, the present invention relates to a cryptosystem that is suitable for multi-functional security applications.

**2. BACKGROUND OF THE INVENTION**

The art of encryption and decryption to sent and receive messages are known since ancient time. In the past, secret messages may be transmitted over communication medium through the used of symbols, riddles or the likes. In modern times, special purpose software programs in combination with equally special purpose computer hardware are used, for example, to hide underlying contents, limit access, inhibit reverse engineering, authenticate sources and some other secure or secret messaging activities.

Millions of computers in the world are connected to each other through the Internet. In effect, this medium of communication provides the single most promising channel with regard to transmission of data and messages, the exchange and dissemination of ideas, the conduct of business and many other related activities. Transmitted messages delivered through the Internet or any other on-line connection may be subject to unauthorized use, unauthorized access and other unlawful acts. Such acts may be reduced or eliminated altogether through the use of cryptosystem. Cryptosystem allows the transmission of unintelligible, except for the intended receivers, messages of a particular importance. There are two general types of cryptographic algorithm in application today, a symmetric and asymmetric (or Public Key cryptosystem). In a symmetric algorithm, encryption key can be calculated from the decryption key and vice versa. Typically, the encryption key is the same as the decryption key and has to be shared. As such, the sender and receiver have to agree on or have the keys before they can protect their communication using encryption process. If the key is divulged to an unauthorized party, messages within the encrypted data can be viewed or tampered with by the unauthorized party without any hindrance. On the other hand, asymmetric algorithm or public key encryption algorithm requires more sophisticated and large hardware configuration due to the increase of computational steps and needs. The keys used for encryption and decryption differ in such a way that at least one key is computationally impossible to determine from the other. The keys will come in pairs, a public key (encryption) and a private key (decryption), and for the purpose of secrecy and preservation of the data integrity, the decryption key is to be kept secret, whereas the public key may be made available to all. Messages encrypted using the public key can only be decrypted using the corresponding private key.

In general, such asymmetric cipher tends to be slower compared to the symmetric ones, particularly due to the larger key sizes. However, using algorithm based on a known elliptical curve discreet log problem, or elliptic curve cryptosystem as proposed by the present invention, much smaller keys can be used. In turn, this smaller key requirement does help in speeding up the processing time. The smaller key size is desirable, as it would be suitable for PC-based application or in other small or mobile communication multi-function security device applications. The proposed cryptosystem overcomes the limitations of the known system and allows the application on PC, small or mobile communication devices for multi-function security application, in addition to the server-based application.

It is therefore an object of the present invention to provide a solution to the problems associated with the known asymmetrical encryption/decryption method and apparatus. The proposed invention uses Elliptic Cryptosystem (ECC) or even the Rivest-Shamir-Adleman (RSA) cryptosystem and any other suitable algorithms to generate secure key pairs. In general, ECC provides greater efficiency than either integer factorization systems or discrete logarithms systems, in terms of computational overheads, key sizes and bandwidth. In its implementation, these savings mean higher speeds, lower power consumption and code size reduction. As a result, a PC-based application may use such system that would normally require much bigger set-up, for example server with equally larger hardware configuration. In addition, ECC offers high level of security. For example, an Elliptic curve $E(Z_p)$ with a projected point PE $(Z_p)$ whose order is a 160-bit prime $p$ offers higher level of security as RSA with a 1024-bit modulus $N$, where $N$ = P*Q. It is also the primary object of the present invention to utilize an easily remembered or recognizable ASCII characters as an input to generate the public key by setting parameters of ECC by spreading the public keys using symmetric encryption and using a proprietary prime number generator.

**3. SUMMARY OF THE INVENTION**

It is therefore an object of the present invention to provide an apparatus for the generation of public key for use in association with a multi-function security system.

It is yet another object of the present invention to provide a method for the generation of a public key based on user-defined ID as input in a cryptosystem.

It is also another object of the present invention to provide a PC-implemented encryption/decryption in a cryptosystem.

These and other objects of the present invention are accomplished by providing,

An apparatus adapted for the generation of a public key for use in association with encryption and decryption of digital data, said apparatus comprises of:-

a computer means (1) having at least a processor (2), a memory unit (3) and an input device (4); and

a key generation module (5) residing in said memory unit;

characterized in that:-

said key generation module processes a user-definable and
recognizable ID of ASCII characters that is inputted via said input device to generate said public key.

The objects of the invention may also be accomplished by providing, A method for generating a public key for use in association with encryption and decryption of digital data comprising:-

a key generation module (5) residing in a memory unit (3) of a computer means (1), said computer means having at least a processor (2), said memory unit (3) and an input device (4);

characterized in that :-

said key generation module (5) processes a user-definable and recognizable ID of ASCII characters inputted via said input device to generate said public key, said method comprises the steps of:-

a) setting at least six predetermined master keys (MasterKey 0, MasterKey 1, MasterKey 2, MasterKey 3, MasterKey 4, MasterKey 5);
b) randomizing said inputted user-definable and recognizable ID of ASCII characters and computing a modulus P associated with said user-definable and recognizable ID of ASCII characters;
c) computing first (A), second (B), third (X) and fourth (D) variables by encrypting said inputted user-definable and recognizable ID of ASCII characters based on said first master key MasterKey 0) and subjecting said encrypted user-definable and recognizable ID of ASCII characters to a hashing function and thereafter, dividing it into four equal length variables, said equal length variables correspond to said first (A), second (B), third (X) and fourth (D) variables, respectively;
d) determining the prime number associated with each of said variables;
e) randomizing the prime number of said first (A), second (B) and third (X) variables in step d) by encrypting each of said prime number based on said second master key (MasterKey 1), third master key (MasterKey 2) and fourth master key (MasterKey 3), respectively;
f) hashing said encrypted first (A), second (B) and third (X) variables in step e) and determining the prime number associated with each of said variables;
g) defining the prime number of said third (X) variable as $X_0$;
h) initializing the initial point ($X_0$) on an elliptic curve as defined by $Y_0^2 = X_0^3 + AX_0 + B \pmod P$ equation, and computing the corresponding initial point ($Y_0$);
i) encrypting the prime of said fourth variable (D) in step d) based on said fifth variable (MasterKey 4) and thereafter subjecting said encrypted variable to a hashing function and defining it as a private key associated with said inputted user-definable and recognizable ID of ASCII characters;
j) computing a projection point ($X_1,Y_1$) of said public key on the elliptic curve by multiplying said initial point ($X_0,Y_0$) with said fourth variable (D) computed in step i); and
k) defining said public key set as a series of $X_0,Y_0$, $X_1,Y_1$,A,B and P computed from the steps of a) to j).

Preferably, strong symmetric encryption systems for example, Triple DES (3DES) and Advance Encryption System (AES), or other known strong public key encryption systems such as ECC and RSA, are employed in the encryption process.

Also preferable, an Elliptic Curve Encryption algorithm is utilized for determining the prime number associated with the variables in the process.

Also preferable, Secure Hashing Algorithm (SHA) is utilized in the process. Such SHA function may include SHA-1, SHA-2 or other strong hashing as known in the art.

## 4. BRIEF DESCRIPTION OF THE DRAWINGS

The embodiments of the invention will now be described, by way of example only, with reference to the accompanying figures in which :

Figure 1 shows a block diagram representation of an apparatus to implement cryptosystem according to the present invention;

Figure 2 shows a flow chart of the method of generating public key in a cryptosystem according to the invention; and

Figure 3 shows a flow chart of the optional further process following the steps depicted in Figure 2.

## 5. DETAILED DESCRIPTION OF THE DRAWINGS

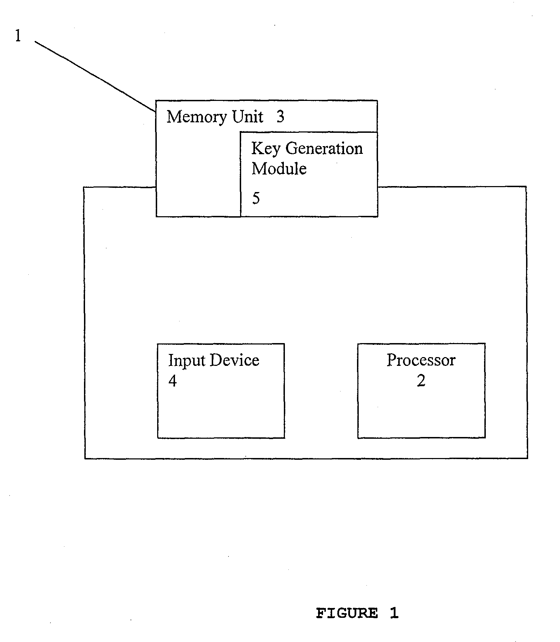

Referring now to the figures, especially to Figure 1, which shows an apparatus for the generation of a public key configured according to the embodiment of the present invention. In its minimum configuration, the apparatus may include a computer means (1) having a processor (2), a memory unit (3) and an input device (4) operably connected to each other. In addition, the computer means (1) may also include a storage device (not shown), display (not shown), network card (also not shown) and any other related components as generally known in the art. Residing within the memory unit (3) is a key generation module (5) that once executed, processes the inputted information keyed-in via the input device (4) to generate public key for use in the manipulation of digital data and information as mentioned in the earlier portion of this description. In contrast to the other known cryptosystems, the key generation module (5) processes a user definable and easily recognizable ID that is inputted via the input device (4). This inputted ID is advantageously based on the common ASCII characters. Such user definable and recognizable ID includes for example, specific name related to the user, for example Adam, Mohamad, Jim, 888-888 etc., or his company name, for example ABCEnterprise_Adam, XYZCorporation_Mohamad, etc. or any other desired ID's phrases. The inputs could be of the easily remembered phrases, which may consist of numbers, words or its combination, and it will be used as an input or seed to generate true public key for use in the encryption and decryption of digital data. Advantageously, it may be used for the purpose of secure storage and retrieval of data, transmitting and receiving information, secure communication, data acquisition, banking and etc. The processor shown in the figure may also include a single or a plurality of processors linked together. The memory unit (3) may include the typical harddisk, RAM or ROM. Further, the input device (4) includes either a keypad, keyboard, mouse or similar pointing device. A virtual keypad, touch screen, a telephone and other computer may also be part of such input device. In general, the apparatus may be implemented as a single stand-alone PC, or a server having connected thereto multiplicity of PC, dumb terminals or the like.

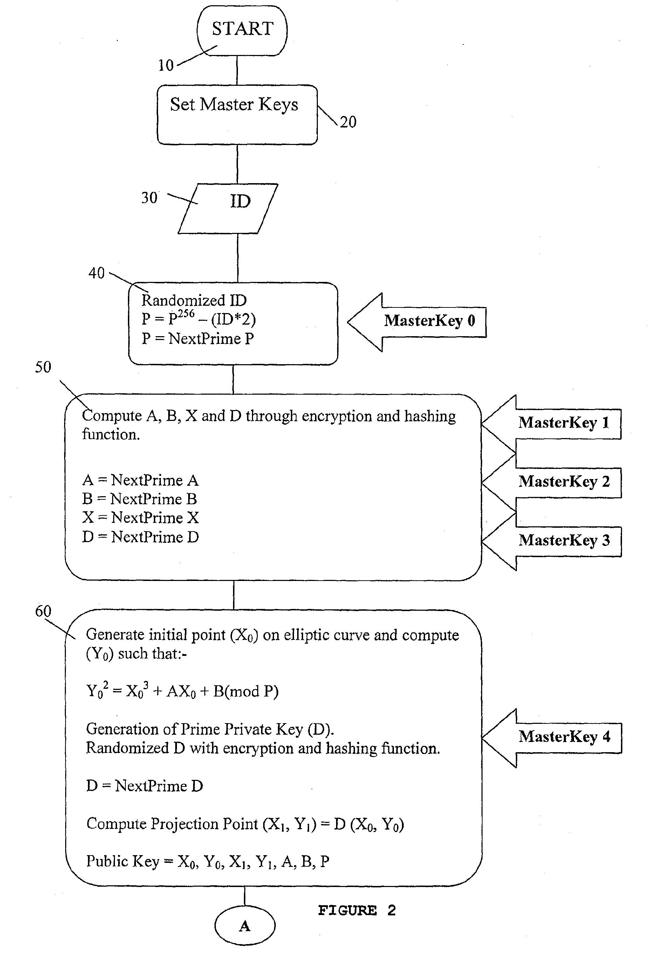

Figure 2 shows a flow chart representing the process to generate a public key according to invention. As indicated earlier, a user-definable and recognizable ID (chosen from the known ASCII characters as discussed earlier) is used to generate the public key by this method. Referring to the figure, the process starts at START (10). The master keys (MasterKey 0, MasterKey 1, MasterKey 2, MasterKey 3, MasterKey 4, MasterKey 5) are set at (20). These master keys may vary according to the requirement of the system owner. However, for compatibility purpose, these master keys should be the same throughout. In the current applications, the master keys are set to have at least 256 bits in length. It is envisaged that for future applications, the master keys may have shorter or longer length to suit future requirements. The inputted ID is then converted into its binary equivalent (30). It is then subjected into a randomizing process in accordance to a preset formula and the modulus P is computed (40). The modulus P is defined as NextPrime P as shown in step (40).

In step (50), the value of variables A, B, X and D associated with the inputted ID are computed. These variables are computed through the following process :-

At first, the inputted ID (in binary) is encrypted using symmetric encryption algorithm such as 3DES, AES, IDEA or other encryption algorithms, as a function of the first master key (MasterKey 0). The encrypted ID is then subjected to a hashing function, preferably using a strong hashing function such as SHA-1, AES 256 or SHA-2. The output becomes a randomized and it will be divided into four, equal length variables, i.e., first variable (A), second variable (B) third variable (X) and fourth variable (D). The prime number associated with each of the variables is then determined.

To illustrate this process, let the inputted user definable and recognizable ID of ASCII characters to be as the following:-

ID = $b_0b_1b_2b_3b_4...b_n$ (shall be in binary format). This ID is then subjected to an encryption process based on the first master key (MasterKey 0), i.e., $ID_{encrypted} \leftarrow$ Symmetric Encryption (ID, MasterKey 0). It will then be subjected to a hashing function. The outcome will then be divided into 4 equal length variables (A, B, X, D). Based on these variables, a prime number generator is called upon to generate 256-bits prime number associated with each of the variables. This process can be illustrated by the following:-

$$\text{Let } A \leftarrow a_0a_1a_2a_3a_4 \ldots a_m$$

$$B \leftarrow b_0b_1b_2b_3b_4 \ldots b_m$$

$$X \leftarrow x_0x_1x_2x_3x_4 \ldots x_m$$

$$D \leftarrow d_0d_1d_2d_3d_4 \ldots d_m$$

First the prime generator will project the numbers to the target size. Let $Q = p_0p_1p_2p_3p_4 \ldots p_m$ be a list of prime numbers starting from 2, 3, 5, 7, 11 and so on. The bits shall be used as an input and used as the seed to get 256-bits number before next prime function is invoked to make them prime. Let us consider another 4 groups (R, S, U, V) of random number consists of {1,2,3,4,...z} for some natural number z chosen for a particular system in order to make it distinct from one another. Therefore,

$$R = r_0r_1r_2r_3r_4 \ldots r_m$$

$$S = s_0s_1s_2s_3s_4 \ldots s_m$$

$$U = u_0u_1u_2u_3u_4 \ldots u_m$$

$$V = v_0v_1v_2v_3v_4 \ldots v_m$$

Projection of the raw parameters are to be made so that they will become 256-bit number. Then,

$$A \leftarrow p_0^{a0+r0} \cdot p_1^{a1+r1} \cdot p_2^{a2+r2} \cdot p_3^{a3+r3} \cdot p_4^{a4+r4} \cdots p_m^{am+rm}$$

$$B \leftarrow p_0^{b0+s0} \cdot p_1^{b1+s1} \cdot p_2^{b2+s2} \cdot p_3^{b3+s3} \cdot p_4^{b4+s4} \cdots p_m^{bm+sm}$$

$$X \leftarrow p_0^{x0+u0} \cdot p_1^{x1+u1} \cdot p_2^{x2+u2} \cdot p_3^{x3+u3} \cdot p_4^{x4+u4} \cdots p_m^{xm+um}$$

$$D \leftarrow p_0^{d0+v0} \cdot p_1^{d1+v1} \cdot p_2^{d2+v2} \cdot p_3^{d3+v3} \cdot p_4^{d4+v4} \cdots p_m^{dm+xm}$$

The prime generator will push the 4 numbers above to the nearest prime number within the neighborhood, as in the case of the current application, 256-bits in size.

$$A_{prime} \leftarrow \text{Nextprime (A)}$$

$$B_{prime} \leftarrow \text{Nextprime (B)}$$

$$X_{prime} \leftarrow \text{Nextprime (X)}$$

$$D_{prime} \leftarrow \text{Nextprime (D)}$$

The three variables ($A_{prime}$, $B_{prime}$, $X_{prime}$) above are then subjected to further encryption process and hashing function again to randomize the variables even further. However, at this step, the variables are encrypted based on its respective master key, where:-

$$A_{prime,encrypted} \leftarrow \text{Symmetric Encryption (} A_{prime}, \text{MasterKey 1)}$$

$$B_{prime,encrypted} \leftarrow \text{Symmetric Encryption (} B_{prime}, \text{MasterKey 2)}$$

$$X_{prime,encrypted} \leftarrow \text{Symmetric Encryption (} X_{prime}, \text{MasterKey 3)}$$

The prime number associated with each of the above is then defined as the following;

$$A \leftarrow \text{Nextprime (} A_{prime,encrypted})$$

$$B \leftarrow \text{Nextprime (} B_{prime, \; encrypted})$$

$$X_0 \leftarrow \text{Nextprime (} X_{prime,encrypted})$$

The parameter $X_0$ is now ready to be the initial point on the elliptic curve as defined by the following equation, $Y_0^2 = X_0^3 + AX_0 + B \pmod{P}$ in step (60). The square root of $Y_0$ of $X_0^3 + AX_0 + B$ on field $F_p$ is then computed. The initial point on the chosen elliptic curve is then defined as ($X_0$, $Y_0$). Next, the fourth variable (D) computed after the process of finding the prime number is then subjected to encryption and hashing function based on the fifth master key (MasterKey 4). It is defined as, $D \leftarrow \text{Symmetric Encryption (} D_{prime}$, MasterKey 4) and this randomized number is known as the private key associated with the inputted ID. It will be multiplied with the initial point ($X_0$, $Y_0$) to obtain the projection point ($X_1$, $Y_1$).

$$(X_1, Y_1) = D (X_0, Y_0)$$

The public key associated with the inputted ID is then defined as a series of the following computed variables from the whole process.

$$\text{Public key} = (X_0, Y_0) \, , \, (X_1, Y_1), \, A, \, B, \, P.$$

The public key shall be encrypted again before sending it to the public key address book/storage. The address associated with this public key set may be published and for use in association with the multi-functional security envisioned by the present invention.
To further illustrate the concept of randomizing and obtaining the prime of a particular inputted ID, the following may be of some reference.
Elliptic Curve Cryptosystem (ECC) consists 256-bit modulo prime P. Let the inputted ID be 32 visible characters. Six bits is assigned for each of the ID character. Then the ID will consists of 192 bits (32 characters X 6 bits). Let P be written in Hexadecimal format.

P=FFFFFFFFFFFFFFFFxxxxxxxxxxxxxxxxyyyyyyyyyyyyyyyyzzzzzzzz zzzzzzzz.

F represents the value of $2^4 - 1 = 15$. The first hexadecimals of P is set to be F's. The next 48 hexadecimal will be determined by the 192-bits ID after undergoing the encryption and hashing process. The second string (xxxxxxxxxxxxxxxx) and third string (yyyyyyyyyyyyyyyy) are taken from the ID after going through Advance Encryption Standard (AES) encryption and secure hashing algorithm SHA-2. The third (yyyyyyyyyyyyyyyy) and fourth string (zzzzzzzzzzzzzzzz) are taken from another round of AES encryption and secure hashing algorithm SHA-2. Then P will be made prime after going through the NextPrime function, where P = NextPrime (P).

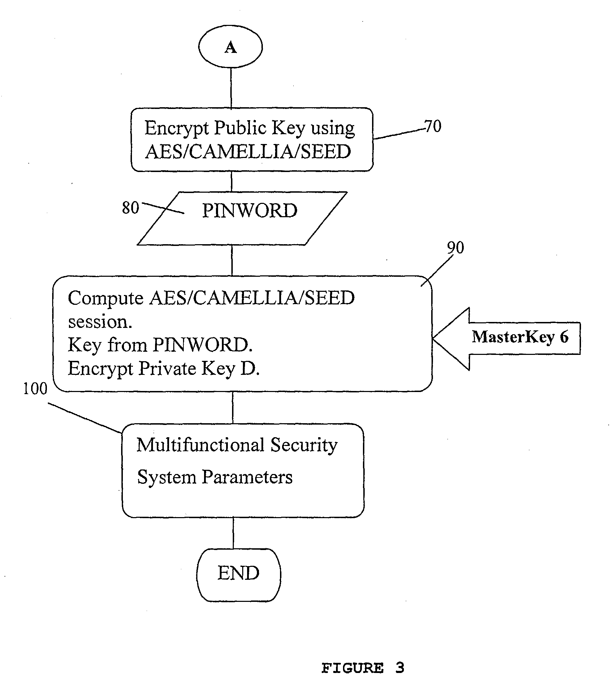

Referring now to Figure 3, where the next optional steps associated with the embodiment of the invention may be performed. In this figure, the Public Key set as defined earlier $\{(X_0, Y_0),(X_1, Y_1), A, B, P\}$ is subjected to an encryption based on the sixth master key (MasterKey 5) using generally known encryption algorithm such as AES, CAMELLIA, SEED or any other algorithm in (70). A user-selected PINWORD (80) is inputted via the input device and it will be used as the session key for further encryption of the private key computed from the previous steps based on the seventh master key (MasterKey 6). It will then be subjected to hashing to make it random and stored. The system is now ready for any application, in particular the multi functional security systems parameters as envisaged by the inventors.

It is believed that the embodiment of the present invention may be incorporated into many other applications. While the preferred embodiments of the present invention have been described, it should be understood that various changes, adaptations and modifications may be made thereto. It should be understood, therefore, that the invention is not limited to details of the illustrated invention shown in the figures and that variations in such minor details will be apparent to one skilled in the art.


**Claims**

1.   An apparatus adapted for the generation of a public key for use in association with encryption and decryption of digital data, said apparatus comprises of:-

     a computer means (1) having at least a processor (2), a memory unit (3) and an input device (4); and

     a key generation module (5) residing in said memory unit;

     **characterized in that** said:-

     said key generation module processes a user-definable and recognizable ID of ASCII characters that is inputted via said input device to generate said public key.

2.   An apparatus as claimed in claim 1, further **characterized in that** said apparatus is a PC having said key generation module residing in its memory.

3.   An apparatus as claimed in claim 1, further **characterized in that** said apparatus is a mobile device having said computer means.

4.   An apparatus as claimed in claim 2, further **characterized in that** said PC is arranged in a stand-alone configuration and/or connected to at least another PC through an on-line connection.

5.   A method for generating a public key for use in association with encryption and decryption of digital data comprising:-

     a key generation module (5) residing in a memory unit (3) of a computer means (1), said computer means having at least a processor (2), said memory unit (3) and an input device (4);

     **characterized in that** :-

     said key generation module (5) processes a user-definable and recognizable ID of ASCII characters inputted via said input device to generate said public key, said method comprises the steps of:-

          a) setting at least six predetermined master keys (MasterKey 0, MasterKey 1, MasterKey 2, MasterKey 3, MasterKey 4, MasterKey 5);

b) randomizing said inputted user-definable and recognizable ID of ASCII characters and computing a modulus P associated with said user-definable and recognizable ID of ASCII characters;

c) computing first (A), second (B), third (X) and fourth (D) variables by encrypting said inputted user-definable and recognizable ID of ASCII characters based on said first master key (MasterKey d) and subjecting said encrypted user-definable and recognizable ID of ASCII characters to a hashing function and thereafter, dividing it into four equal length variables, said equal length variables correspond to said first (A), second (B), third (X) and fourth (D) variables, respectively;

d) determining the prime number associated with each of said variables;

e) randomizing the prime number of said first (A), second (B) and third (X) variables in step d) by encrypting each of said prime number based on said second master key (MasterKey 1), third master key (MasterKey 2) and fourth master key (MasterKey 3), respectively;

f) hashing said encrypted first (A), second (B) and third (X) variables in step e) and determining the prime number associated with each of said variables;

g) defining the prime number of said third (X) variable as $X_0$;

h) initializing the initial point ($X_0$) on an elliptic curve as defined by $Y_0^2 = X_0^3 + AX_0 + B(mod\ P)$ equation, and computing the corresponding initial point ($Y_0$) ;

i) encrypting the prime of said fourth variable (D) in step d) based on said fifth variable (MasterKey 4) and thereafter subjecting said encrypted variable to a hashing function and defining it as a private key associated with said inputted user-definable and recognizable ID of ASCII characters;

j) computing a projection point ($X_1$, $Y_1$) of said public key on the elliptic curve by multiplying said initial point ($X_0$,$Y_0$) with said fourth variable (D) computed in step i); and

k) defining said public key set as a series of $X_0$,$Y_0$, $X_1$,$Y_1$,A,B and P computed from the steps of a) to j).

6. A method as claimed in claim 5, further **characterized in that** said public key set is encrypted based on said sixth master key (MasterKey 5).

7. A method as claimed in claim 5, further **characterized in that** said user-definable and recognizable ID of ASCII characters is first converted into its binary equivalent of at least 128-bits in length before being subjected to the steps of b) to k), and if said binary equivalent is having less than 128-bits in length, an external bit is padded to obtain the equivalent 128-bits in length.

8. A method as claimed in claim 5, further **characterized in that** said computed first (A), second (B), third (X) and fourth (D) variables in step c) are at least 256 bits in length.

9. A method as claimed in claim 5, further **characterized in that** a user-selected pinword is inputted via said input device and a seventh master key (Master key 6) is also set beforehand.

10. A method as claimed in claim 5, further **characterized in that** said private key as defined in step i) is encrypted based on said seventh master key (MasterKey 6) and thereafter subjected to a hashing function and thereafter stored.

11. A method as claimed in any of claims 5 to 9, further **characterized in that** said master keys (MasterKey 0, MasterKey 1, MasterKey 2, MasterKey 3, MasterKey 4, MasterKey 5, MasterKey 6) are at least 256-bits in length.

1

Memory Unit   3

Key Generation
Module

5

Input Device
4

Processor
2

FIGURE 1

START

10

Set Master Keys 20

30 / ID /

40 Randomized ID
$P = P^{256} - (ID*2)$
$P = \text{NextPrime } P$

**MasterKey 0**

50 Compute A, B, X and D through encryption and hashing function.

$A = \text{NextPrime } A$
$B = \text{NextPrime } B$
$X = \text{NextPrime } X$
$D = \text{NextPrime } D$

**MasterKey 1**

**MasterKey 2**

**MasterKey 3**

60 Generate initial point ($X_0$) on elliptic curve and compute ($Y_0$) such that:-

$$Y_0^2 = X_0^3 + AX_0 + B(\bmod P)$$

Generation of Prime Private Key (D).
Randomized D with encryption and hashing function.

$D = \text{NextPrime } D$

Compute Projection Point $(X_1, Y_1) = D (X_0, Y_0)$

Public Key $= X_0, Y_0, X_1, Y_1, A, B, P$

**MasterKey 4**

A

**FIGURE 2**

A

Encrypt Public Key using
AES/CAMELLIA/SEED ———70

80 PINWORD

90

Compute AES/CAMELLIA/SEED
session.
Key from PINWORD.
Encrypt Private Key D.

◁ MasterKey 6

100

Multifunctional Security

System Parameters

END

FIGURE 3